# FASCICULE DE BREVET EUROPEEN

(11) **EP 3 164 296 B1**
(45) Date de publication et mention de la délivrance du brevet: **24.02.2021**
(21) Numéro de dépôt: 15733757.7
(22) Date de dépôt: 02.07.2015
(51) Int. Cl.: B60N 2/28

(54) **EQUIPEMENT POUR LE TRANSPORT D'UN ENFANT DANS UN VEHICULE, COMPRENANT UNE EMBASE ET UNE NACELLE ASSEMBLABLES PAR TRANSLATION, EMBASE ET NACELLE CORRESPONDANTES**
VORRICHTUNG ZUM TRAGEN EINES KINDES IN EINEM FAHRZEUG UND MIT EINER ÜBERSETZBAREN MONTIERBAREN BASIS UND KINDERLIEGE UND ZUGEHÖRIGE BASIS UND KINDERLIEGE
DEVICE FOR CARRYING A CHILD IN A VEHICLE AND INCLUDING A TRANSLATABLY MOUNTABLE BASE AND BASSINET, AND CORRESPONDING BASE AND BASSINET

(30) Priorité: 03.07.2014 FR 1456412
(43) Date de publication de la demande: 10.05.2017
(73) Titulaire: Dorel France, 49309 Cholet Cedex (FR)
(72) Inventeur: PASQUIER, Nicolas, F-49700 Doue la Fontaine (FR); POUZIN, Emmanuel, F-49300 Cholet (FR)
(74) Mandataire: Vidon Brevets & Stratégie
(86) Numéro de dépôt international: PCT/EP2015/065159
(87) Numéro de publication internationale: WO 2016/001387

(56) Documents cités:
- EP-A1- 1 728 675
- GB-A- 2 429 637
- US-A1- 2004 239 079
- US-B1- 6 283 545

## Description

### 1. Le domaine de l'invention

La présente invention concerne le domaine des équipements de puériculture, permettant le transport d'enfants en bas âge dans des véhicules, en toute sécurité. Plus précisément, l'invention concerne les équipements formés d'un ensemble, ou équipement, formé d'une embase destinée à être solidarisée au véhicule et d'un élément amovible apte à recevoir un enfant, pouvant être solidarisée à l'embase ou désolidarisée de celle-ci.

Plus précisément encore, l'invention, concerne de tels équipements, dans lesquels l'élément amovible est une nacelle, dans laquelle l'enfant est installé dans une position allongée.

### 2. Solutions de l'art antérieur

Les enfants en bas âge, notamment ceux qui sont âgés de moins de 6 mois, peuvent être transportés en sécurité dans des véhicules automobiles dans deux types d'équipements de transport : soit dans des sièges autos, usuellement appelés « coques » (de type « groupe 0+ » selon le Règlement R44), dans lesquels ils sont essentiellement semi-assis, et qui sont installés dans les véhicules de telle sorte que l'enfant soit dos à la route, soit dans des nacelles (de type « groupe 0 » selon le Règlement R44) dans lesquels les enfants sont allongés, et qui sont installés dans le véhicule de telle sorte que les enfants soient étendus perpendiculairement à la route.

Les coques et les nacelles peuvent généralement être soit installées dans un véhicule, soit montées sur un châssis roulant de poussette, de façon à former une poussette ou un landau. Un adulte peut ainsi passer l'enfant d'une poussette ou d'un landau au véhicule automobile, sans avoir à sortir l'enfant de la coque ou de la nacelle.

Lors de l'installation de la coque ou de la nacelle dans le véhicule, il est nécessaire d'assurer une solidarisation très sûre et efficace de la coque ou de la nacelle au siège du véhicule, pour assurer la sécurité de l'enfant. Cette solidarisation peut se faire par le biais des ceintures de sécurité du véhicule. Cette solidarisation nécessite en général des manœuvres relativement complexes et fastidieuses, qui sont parfois mal exécutées par les adultes. La sécurité de l'enfant est ainsi compromise.

Selon une autre approche, qui tend à se généraliser, la solidarisation est assurée par le système d'accrochage normalisé connu sous le nom de « ISOFIX », qui utilise des éléments de fixation prévus à cet effet dans le véhicule.

Pour simplifier l'installation dans le véhicule d'une coque dans laquelle est installé un enfant en bas âge, il est souvent prévu des embases, qui sont solidarisées à un siège de véhicule et qui comportent un système d'accrochage spécifique leur permettant de recevoir et de solidariser facilement une coque d'un modèle spécifique. Une fois l'embase fixée au siège du véhicule par des moyens adaptés, ceinture de sécurité ou pinces de fixation ISOFIX, il est plus aisé d'y solidariser un siège auto ou une coque, notamment en position dos à la route. Le brevet US 6,283,545 B1 divulgue un exemple de l'art antérieur.

De telles embases ne sont en revanche pas bien adaptées pour recevoir des nacelles. En effet, les nacelles sont installées en position perpendiculaire à la route, et occupent donc une grande largeur du siège du véhicule, supérieure à la largeur d'une embase.

En conséquence, une personne qui souhaiterait installer une nacelle sur une telle embase, devrait porter et maintenir la nacelle à bout de bras, au dessus de la banquette arrière du véhicule (après avoir introduit la nacelle dans l'espace correspondant, entre les dossiers avant et arrière, en tenant compte de l'ouverture disponible au niveau de la porte, et en maintenant la nacelle horizontale, si un enfant est présent), puis déposer la nacelle sur l'embase, de façon à assembler les deux éléments, sans voir précisément où sont les éléments de verrouillage de l'embase et de la nacelle, ou, en d'autres termes, à tâtons. Ceci n'est ni aisé, ni ergonomique, et en outre dangereux, car une mauvaise solidarisation (seulement certains des crochets verrouillés, par exemple) peut ne pas être détectée.

### 3. Objectifs de l'invention

La présente invention a pour objectif de pallier ces inconvénients de l'art antérieur.

En particulier, l'invention a pour objectif, selon au moins un mode de réalisation, de simplifier et de rendre plus efficace la mise en œuvre et la solidarisation d'une nacelle dans un véhicule.

L'invention a ainsi en particulier pour objectif de faciliter l'installation des nacelles, dans de bonnes conditions de sécurité.

Un autre objectif de l'invention est, selon au moins un mode de réalisation, de donner la possibilité à des adultes utilisant une coque et une nacelle pour transporter leur enfant, d'installer celui de ces équipements de support de leur choix dans un véhicule, avec la même simplicité d'installation, et sans qu'il en résulte un encombrement inutile du véhicule.

### 4. Exposé de l'invention

Ces objectifs, ainsi que d'autres qui apparaitront plus clairement par la suite, sont atteints à l'aide d'un équipement de transport d'un enfant en bas âge dans un véhicule, comprenant une embase destinée à être solidarisée à un siège dudit véhicule et une nacelle permettant d'accueillir ledit enfant en position allongée dans la direction longitudinale de la nacelle, et pouvant être solidarisée à ladite embase.

Selon l'invention, ladite nacelle et ladite embase comprennent des éléments de guidage de formes complémentaires permettant de réaliser un guidage en translation entre ladite nacelle et ladite embase, selon une direction sensiblement parallèle à la direction longitudinale de la nacelle.

Ce guidage en translation permet une installation aisée : la nacelle peut être introduite, par l'une de ses extrémités, dans l'embase, depuis l'extérieur du véhicule, puis déplacée progressivement en translation pour venir prendre la position de voyage, dans laquelle elle rest fermement solidarisée à l'embase. Il n'est pas nécessaire de devoir maintenir, notamment à bout de bras, la nacelle au-dessus de l'embase, pour les assembler ensuite en les ramenant l'un vers l'autre par un mouvement vertical (ce mouvement étant cependant, dans certains modes de réalisation, possible également).

Selon une caractéristique de l'invention, l'équipement de transport comprend des moyens de verrouillage et de déverrouillage de ladite nacelle par rapport à ladite embase, dans au moins une position d'utilisation.

Lesdits moyens de verrouillage et de déverrouillage au moins un crochet mobile entre une position déverrouillée et une position verrouillée, monté sur ladite embase.

Lesdits moyens de verrouillage et de déverrouillage comprennent, sur ladite nacelle, au moins une tige coopérant avec le ou lesdits crochets.

La mise en œuvre d'une tige coopérant avec le ou les crochets permet notamment une solidarisation simple et efficace.

Selon un mode de réalisation particulier, cette tige peut être métallique, dans l'objectif d'être dotée d'une bonne résistance aux contraintes mécaniques.

Selon un mode de réalisation particulier, ladite embase comprend quatre crochets, coopérant avec deux tiges de ladite nacelle.

Selon une caractéristique particulière, lesdits crochets sont montés de façon à pouvoir également coopérer avec une coque ou un siège auto.

Ainsi, l'embase peut avantageusement être solidarisée à divers éléments pour recevoir un enfant, notamment en fonction de son âge, de son poids et/ou de sa taille. Une seule embase est nécessaire.

Selon une caractéristique de l'invention, la ou lesdites tiges sont parallèles à la direction longitudinale de la nacelle.

Selon une caractéristique particulière, une des extrémités de la ou desdites tiges est incurvée vers le haut, de façon à entraîner le verrouillage d'un crochet sur la tige, lorsque ladite extrémité entre en contact avec ledit crochet.

Ainsi, la forme de la tige et sa coopération avec le crochet permet un verrouillage aisé et fiable de l'embase à la nacelle, lors du guidage de cette dernière en translation. C'est le déplacement en translation qui assure un verrouillage « automatique » (c'est-à-dire sans action supplémentaire) de la nacelle à l'embase.

Selon une caractéristique particulière, ladite embase comprend au moins une portion formant coulisse, apte à guider en translation au moins un coulisseau complémentaire lié à une nacelle.

Selon une caractéristique particulière, ledit coulisseau et ladite coulisse forment un assemblage de type queue d'aronde.

Selon une caractéristique particulière, ladite coulisse est évasée, de façon à permettre également un assemblage de ladite nacelle et de ladite embase en déplaçant ladite nacelle sensiblement verticalement.

Ainsi, l'utilisateur peut installer la nacelle en deux phases successives. Lors d'une première phase d'installation, l'utilisateur peut placer la portion avant de la nacelle au niveau de l'embase, en regard du coulisseau de façon approximative. La partie évasée permet de tolérer un alignement imparfait, et guide progressivement la nacelle dans l'alignement prévu. Une partie du poids de la nacelle est alors supportée par l'embase, au bénéfice de l'utilisateur. Lors d'une seconde phase d'installation, l'utilisateur peut alors terminé le déplacement subséquent en translation de la nacelle précisément selon cet alignement.

Selon une caractéristique particulière, ledit coulisseau s'étend entre les deux tiges.

Selon une caractéristique particulière, ledit coulisseau présente une portion d'extrémité de largeur réduite.

Selon une caractéristique particulière, ladite portion d'extrémité présente une forme se développant progressivement jusqu'à une forme complémentaire de ladite coulisse.

Selon une caractéristique particulière, l'équipement de transport comprend des moyens de butée, interrompant la translation de ladite nacelle lorsque celle-ci est dans une position d'installation.

Selon une caractéristique particulière, lesdits moyens de butée sont formés par une seconde portion incurvée d'au moins une desdites tiges et/ou par une butée formée sur la nacelle et coopérant avec une zone d'arrêt correspondante de ladite embase.

Selon une caractéristique particulière, ladite nacelle comprend des poignées centrales, permettant son transport, et une poignée d'extrémité, permettant de contrôler le guidage en translation.

Ainsi, ces poignées permettent une manipulation aisée de la nacelle dans l'espace restreint offert par l'habitacle du véhicule, en particulier lors des étapes de solidarisation et de désolidarisation de la nacelle par rapport à l'embase, une main supportant l'essentiel du poids à l'aide des poignées centrales, et l'autre main équilibrant et guidant la nacelle pour l'assemblage avec l'embase.

Selon une caractéristique particulière, lorsque ladite nacelle est assemblée à ladite embase, la portion arrière de ladite nacelle, correspondant à la zone recevant les pieds de l'enfant, est placée sensiblement au-dessus de ladite embase, et la portion avant de ladite nacelle, correspondant à la zone recevant la tête de l'enfant, est placée en porte-à-faux par rapport à ladite embase.

### 5. Exposé des figures

L'invention sera mieux comprise à la lecture de la description suivante d'un mode de réalisation préférentiel, donné à titre illustratif et non limitatif, et accompagné des figures, parmi lesquelles :
- la figure 1 est une vue en perspective d'une embase pour siège auto selon un mode de réalisation de l'invention ;
- la figure 2 est une vue en perspective montrant la face inférieure d'une nacelle adaptée pour être fixée sur l'embase de la figure 1 ;
- la figure 3 est une vue de coté de la nacelle de la figure 2 ;
- la figure 4 est une vue de coté de l'embase de la figure 1 sur laquelle est montée une nacelle ;
- la figure 5 est une vue de coté de l'embase de la figure 1 sur laquelle est montée une coque ;
- La figure 6 est une vue schématique en perspective d'une embase selon le deuxième mode de réalisation de l'invention ;
- La figure 7 est une vue schématique de dessous d'une nacelle selon le deuxième mode de réalisation de l'invention ;
- La figure 8 est une vue schématique de côté d'une nacelle selon le deuxième mode de réalisation de l'invention ;
- La figure 9 est une vue schématique en perspective de l'interface entre l'embase et la nacelle selon le deuxième mode de réalisation de l'invention.

### 6. Description détaillée d'un mode de réalisation

Un équipement de transport selon l'invention permet le transport d'un enfant en bas âge en position allongée. Il permet donc d'assurer le confort de l'enfant lors des divers déplacements du véhicule, tout en garantissant sa sécurité. La dissociation de la nacelle et de l'embase confère de plus à cet équipement de transport un caractère modulable avantageux.

La nacelle peut ainsi, le cas échéant, être solidarisée à différents moyens de transport, selon les besoins de l'utilisateur. A titre d'exemple, la nacelle peut soit être solidarisée à un équipement de type châssis de poussette ou de landau prévu à cet effet, lors des déplacements effectués à pied, soit être solidarisée à une embase selon l'invention, lors de l'utilisation d'un véhicule.

L'enfant peut être transféré à l'intérieur du véhicule tout en restant à l'intérieur de la nacelle, ce qui améliore son confort tout en limitant la mise en œuvre de manipulations inutiles qui pourraient nuire à sa sécurité. La dissociation de la nacelle et de l'embase permet entre autres la mise en œuvre sur des périodes de temps prolongées de moyens de fixations fiables et sécurisés de l'embase au siège du véhicule, indépendamment de la fréquence d'utilisation de l'équipement de transport.

La complémentarité des formes de l'embase et de la nacelle permet quant à elle un agencement plus aisé de ces derniers, sans nuire pour autant au caractère modulable de l'équipement de transport. Le guidage en translation mis en œuvre entre la nacelle et l'embase selon une direction sensiblement parallèle à la direction longitudinale de la nacelle permet avantageusement de faciliter l'introduction et la manipulation de cette dernière dans l'habitacle du véhicule.

### 6.1 Embase

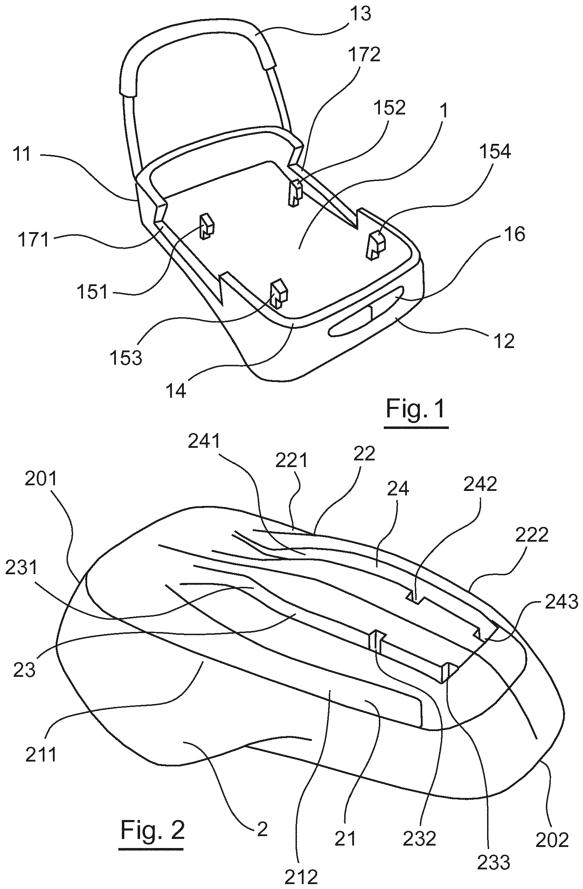

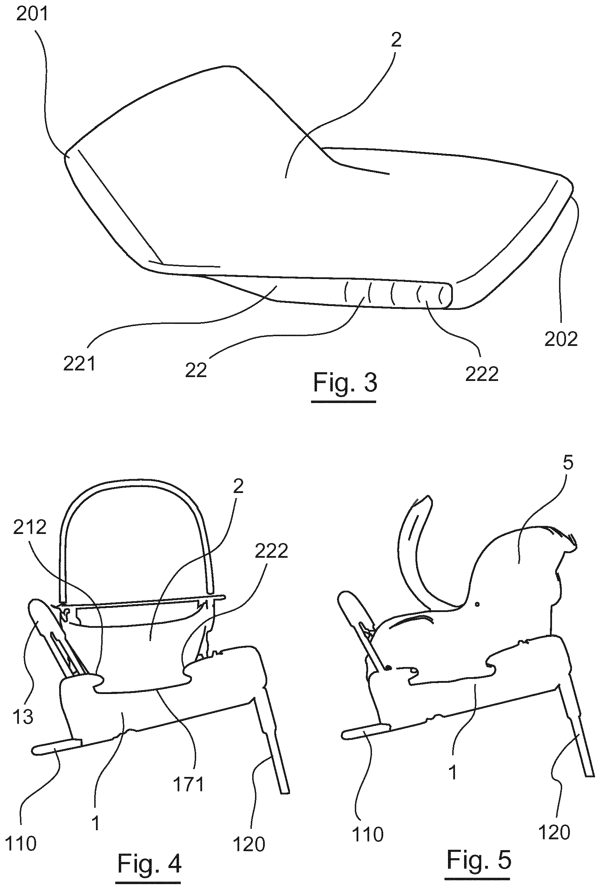

La figure 1 représente une embase 1 selon un mode de réalisation de l'invention. Les figures 4 et 5 montrent cette même embase 1, portant respectivement une nacelle 2 et une coque 5. Cette embase 1 est destinée à être montée sur le siège d'un véhicule. Elle comprend pour cela des moyens de solidarisation adaptés, connus de l'homme du métier, qui ne sont pas représentés sur la figure 1. Ces moyens de solidarisation peuvent notamment comprendre des pinces de fixation 110, connue sous le nom « pinces ISOFIX », fixées à proximité de l'extrémité arrière 11 de l'embase. De telles pinces de fixation 110 peuvent venir se solidariser sur des anneaux d'ancrage spécifiques situés entre l'assise et le dossier du siège d'un véhicule.

Les moyens de solidarisation peuvent également comprendre un troisième point de fixation, permettant de s'opposer au basculement du siège, par rotation autour de l'axe défini par les anneaux d'ancrage, par exemple sous la forme d'une sangle dite de « top tether » ou d'une jambe de support 120, fixée à proximité de l'extrémité avant 12 de l'embase. Cette jambe de support 120, s'étendant sensiblement verticalement vers le bas, permet à l'embase 1 de prendre appui sur le plancher du véhicule, à l'avant du siège.

Enfin, l'embase peut comprendre une barre anti-rebond 13, destinée à venir en appui contre le dossier du siège du véhicule, pour éviter toute rotation de l'embase 1 autour des anneaux d'ancrage ISOFIX.

### 6.2 Solidarisation d'une coque et d'une nacelle

Dans ce mode de réalisation, l'embase 1 comporte, de façon connue en elle-même, des moyens de réception d'un siège auto, par exemple une coque permettant le transport d'un enfant dans une position essentiellement semi-assise, dos à la route. Ces moyens de réception présentent une forme adaptée de la surface supérieure de l'embase 1, et notamment une bordure périphérique 14 permettant d'assurer un placement correct de la coque 5 sur l'embase 1, et par un ensemble de quatre crochets 151, 152, 153 et 154, permettant d'assurer le verrouillage de la coque sur l'embase 1.

Ces crochets sont mobiles en rotation autour d'un axe horizontal, entre une position de verrouillage, dans laquelle ils peuvent maintenir la coque 5 solidarisée à l'embase, et une position de déverrouillage, dans laquelle ils autorisent le retrait de la coque 5. Ils sont, par défaut, maintenus par des moyens de rappel tels que des ressorts dans la position de verrouillage. Une commande de déverrouillage 16, placée par exemple sur la face avant de l'embase 1, permet de déplacer ces crochets 151, 152, 153 et 154 de leur position de verrouillage vers leur position de déverrouillage, pour permettre le retrait de la coque 5 placée sur l'embase 1. Alternativement, cette commande de déverrouillage 16 peut être placée sur le dessus de l'embase 1, sur le côté, ou à tout emplacement accessible par un adulte.

Selon l'invention, l'embase 1 présente une forme lui permettant en outre de guider en translation une nacelle adaptée, dans une direction sensiblement horizontale et sensiblement perpendiculaire à la direction d'avancement du véhicule. Bien sûr, dans d'autres modes de réalisation, l'embase peut être adaptée pour recevoir uniquement une nacelle.

La structure de cette nacelle présente généralement une orientation prédéfinie qui détermine en conséquence l'orientation de l'enfant qui y est installé. Ainsi, on définit une portion arrière de ladite nacelle, correspondant à la zone recevant les pieds de l'enfant, et une portion avant de ladite nacelle correspondant à la zone recevant la tête de l'enfant.

### 6.3 Solidarisation d'une nacelle selon un premier mode de réalisation de l'invention

Dans un premier mode de réalisation représenté dans la figure 1, les moyens de guidage en translation de la nacelle 2 sont constitués par des découpes 171 et 172 de la bordure périphérique 14 de l'embase, ces découpes présentant une forme en queue d'aronde femelle.

Il est à noter que cette conformation de découpes ne constitue qu'un exemple de mode de réalisation possible de l'invention, l'homme du métier connaissant des variantes possibles à cette forme « en queue d'aronde » pour assurer le guidage en translation d'une pièce sur une autre pièce. Une de ces variantes est décrite plus en détail dans la description de la solidarisation de la nacelle selon un deuxième mode de réalisation.

Une nacelle 2, spécialement adaptée pour être portée par l'embase 1, est représentée sur les figures 2, 3 et 4. La partie intérieure de cette nacelle, destinée à accueillir un enfant en bas âge, est conformée de façon classique, connue de l'homme du métier. En revanche sa face inférieure, côté extérieur, visible sur la figure 2, présente une forme spécifique lui permettant de coopérer en coulissement avec l'embase 1. Ainsi, cette face inférieure de la nacelle 2 présente deux rainures 21 et 22, s'étendant sensiblement longitudinalement sur la face inférieure de la nacelle.

Ces rainures 21 et 22 présentent, sur une leurs portions de guidage, respectivement 212 et 222, une forme complémentaire à la forme des découpes 171 et 172 en queue d'aronde de l'embase 1. Ces rainures 21 et 22 forment sur la face inférieure de la nacelle 2 une coulisse en queue d'aronde mâle, permettant un guidage en translation, selon un axe horizontal et perpendiculaire à la direction d'avancement du véhicule, par rapport à la queue d'aronde femelle définie par les découpes 171 et 172 de l'embase 1.

Ces rainures 21 et 22 de la face inférieure de la nacelle 2 présentent ici deux portions successives distinctes.

Les portions de ces rainures qui sont les plus proches de la portion arrière 202 de la nacelle 2 forment des portions de guidage, respectivement 212 et 222, présentant des formes complémentaires des formes en queue d'aronde des découpes 171 et 172, avec un jeu relativement peu important. Ainsi, quand ces portions de guidage 212 et 222 sont engagées dans les découpes en queue d'aronde 171 et 172 de l'embase 1, la nacelle est guidée en coulissement par la liaison coulisse formée entre les queues d'aronde mâle et femelle.

Les découpes en queue d'aronde 171 et 172 de l'embase 1 ont alors une fonction dite de « coulisse » (partie femelle de l'assemblage) lorsque les portions de guidage 212 et 222 ont une fonction dite de « coulisseau » (mâle de l'assemblage). Dans d'autres modes de réalisation, la partie femelle peut être placée sur la nacelle, et la partie mâle sur l'embase. Il est également possible de combiner plusieurs coulisses et/ou plusieurs coulisseaux.

Selon ce mode de réalisation, le seul mouvement possible de la nacelle 2 par rapport à l'embase 1 est alors un mouvement de translation selon la direction horizontale de cette coulisse.

Il est à noter que les rainures 21 et 22 sont fermées à leur extrémité la plus proche de la portion arrière 202 de la nacelle 2. Les extrémités de ces rainures peuvent ainsi venir en butée contre une découpes 171 ou 172 de l'embase 1.

Les portions de guidage 212 et 222, respectivement des rainures 21 et 22, se prolongent par des portions d'engagement, respectivement 211 et 221. Ces portions plus proches de la portion avant 201 de la nacelle 2 sont ouvertes à leur extrémité. Par ailleurs, ces portions d'engagement des rainures 21 et 22 présentent une forme évasée (« en entonnoir ») permettant un guidage de la nacelle 2 dans les découpes en queue d'aronde femelle 171 et 172, avec un jeu relativement important.

Cette forme évasée au niveau des portions d'engagement 211 et 221 permet un déplacement horizontal de la nacelle 2 dans sa direction longitudinale, un déplacement vertical, mais également un déplacement horizontal dans la direction d'avancement du véhicule. Ces portions d'engagement 211 et 221 permettent donc de faciliter la mise en place de la nacelle, et d'ajuster progressivement la position de la nacelle 2 lors de la translation, même lorsque cette dernière est introduite dans l'embase 1 selon une direction légèrement désaxée par rapport à l'axe défini par les découpes en queue d'aronde 171 et 172 de l'embase 1.

Ainsi, il est possible de placer la nacelle 2 sur l'embase 1 par un mouvement de translation dans la direction horizontale perpendiculaire à la direction d'avancement du véhicule, les découpes 171 et 172 s'engageant dans l'extrémité ouverte des rainures 21 et 22.

Il est également possible de placer la nacelle 2 en la posant sur l'embase 1, selon un mouvement sensiblement vertical, de telle sorte que les portions d'engagement 211 et 221 des rainures 21 et 22 viennent s'engager dans les découpes en queue d'aronde 171 et 172. Un déplacement subséquent en translation de la nacelle selon sa direction longitudinale suffit alors à mettre les portions de guidage 212 et 222 des rainures 21 et 22 en contact avec les découpes 171 et 172. La nacelle 2 est alors guidée en translation par rapport à l'embase 1, sans que son déplacement vertical soit possible.

### 6.4 Rainures de verrouillage selon le premier mode de réalisation de l'invention

La face inférieure de la nacelle 2 présente également, entre les rainures 21 et 22, deux autres rainures longitudinales 23 et 24. Ces rainures 23 et 24 présentent des formes adaptées pour coopérer avec les crochets de verrouillage 151 et 152 de l'embase 1. Il est à noter que, quand la nacelle 2 est installée sur l'embase 1, seule l'une de ces rainures, 23 ou 24 est destinée à coopérer avec les crochets 151 et 152. La présence des deux rainures 23 et 24 vise à permettre l'installation de la nacelle 2 sur l'embase 1 dans deux positions distinctes, la portion avant 201 de la nacelle 1 étant à droite ou à gauche par rapport à la direction d'avancement du véhicule.

Les crochets 151 et 152, sont normalement, en l'absence d'action sur les moyens de commande 16, maintenus par des moyens de rappel dans leur position de verrouillage. Chacune de ces rainures 23 et 24 présente une extrémité ouverte, dans la direction de la portion avant 201 de la nacelle. Par ailleurs, à proximité de ces extrémités, chacune de ces rainures est suffisamment large pour permettre l'introduction facile des crochets 151 et 152 dans une des rainures, quand la nacelle 2 est posée en position intermédiaire sur l'embase 1. Le déplacement en translation de la nacelle, depuis cette position intermédiaire vers une position dans laquelle la nacelle est guidée en coulissement sur l'embase, entraine un déplacement des crochets 151 et 152, dans la rainures 23 ou 24 vers la portion arrière 202 de la nacelle.

Les rainures 23 et 24 présentent chacune une zone de louvoiement, respectivement 231 et 241. Quand les crochets 151 et 152 se déplacent dans ces zones vers la portion arrière 202 de la nacelle 2, la forme de la rainure oblige les crochets 151 et 152 à passer de leur position de verrouillage à leur position de déverrouillage. Ce changement de position se fait à l'encontre des moyens de rappel qui tendent à rappeler les crochets 151 et 152 vers leur position de verrouillage.

Dans la portion des rainures 23 et 24 située à proximité de la portion arrière 202 de la nacelle 2, des logements 232, 233, 242 et 243 sont prévus, en bordure des rainures, pour recevoir les crochets 151 et 152. Quand ces crochets, coulissant dans une rainure 23 ou 24, arrivent en regard de ces logements, ils sont repoussés par leurs moyens de rappel dans ces logements, dans lesquels ils reprennent leur position de verrouillage. Selon au autre mode de réalisation, ces crochets peuvent uniquement coulisser dans une rainure 23 ou 24, la fonction de blocage du coulissement étant assurée par un autre moyen.

Une action sur les moyens de commande 16 de l'embase, permettant de faire passer les crochets 151 et 152 de leur position de verrouillage à leur position de déverrouillage est alors nécessaire pour faire sortir les crochets 151 et 152 des logements 232 et 233 ou 242 et 243, et permettre de nouveau le coulissement de la nacelle. L'engagement des crochets 151 et 152 dans ces logements permet donc de bloquer le coulissement de la nacelle 2 par rapport à l'embase 1, une action sur la commande 16 de l'embase 1 pouvant désactiver ce blocage. Une fois bloquée par les crochets 151 et 152, qui suppriment le seul degré de liberté de la nacelle 2 montée coulissante par rapport à l'embase 1, cette nacelle est parfaitement assemblée à l'embase 1.

Dans ce mode de réalisation représenté par les figures, les rainures 23 et 24 comportent chacune deux logements, visant à coopérer avec les deux crochets 151 et 152. Il est cependant possible de mettre en œuvre des modes de réalisation dans lesquels la face inférieure de la nacelle présente une conformation lui permettant de coopérer avec un seul crochet, 151 ou 152, ou toute combinaison de un ou plusieurs crochets.

### 6.5 Solidarisation d'une nacelle selon un deuxième mode de réalisation de l'invention

Selon ce deuxième mode de réalisation particulier, l'embase peut être du type décrit dans le document de brevet EP 2 210 268.

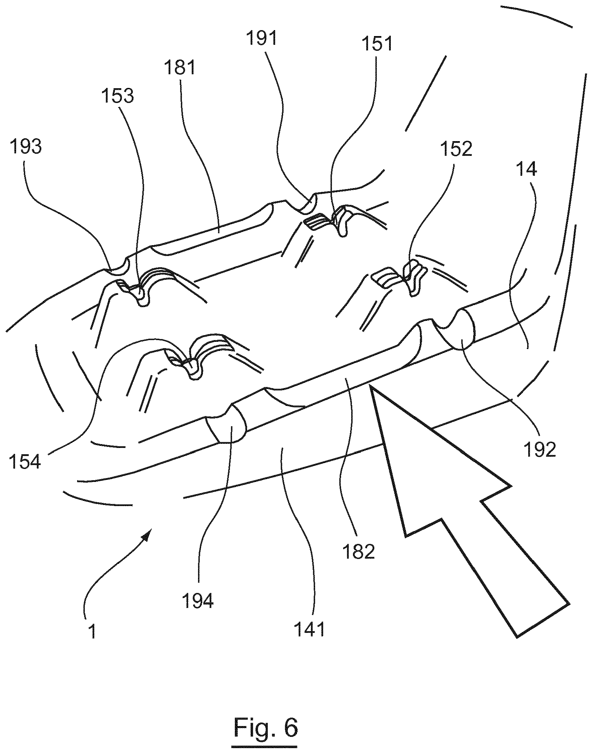

Comme illustré par la figure 6, l'embase 1 comprend, pour le guidage en translation d'une nacelle 3 adaptée, dans une direction sensiblement horizontale et sensiblement perpendiculaire à la direction d'avancement du véhicule, des découpes, ou échancrures, centrales 181 et 182 de la bordure périphérique 14. Lorsque considérées selon une vue de côté de l'embase 1, ces découpes centrales 181 et 182 sont alignées selon une direction correspondant à la direction de coulissement de l'embase, illustrée par la flèche F1, dans le prolongement l'une de l'autre, dans l'espace défini entre les crochets 151, 152, 153 et 154.

Ces découpes centrales 181 et 182 présentent une forme évasée, avec une base sensiblement plane et deux extrémités incurvées. Il est cependant à noter que cette conformation des découpes ne constitue qu'un exemple de mode de réalisation possible de l'invention, l'homme du métier connaissant des variantes possibles à cette forme, telle que la forme « en queue d'aronde » décrite ci-dessus.

L'embase 1 comprend de plus, sur sa bordure périphérique 14 des encoches 191, 192, 193 et 194 placées de part et d'autre des découpes centrales 181 et 182. Lorsque considérées selon une vue de côté de l'embase 1, les couples d'encoches 191, 192 et 193, 194 sont respectivement alignés parallèlement à la direction de coulissement et avec des supports 1510, 1520, 1530 et 1540, de crochets 151, 152 et 153, 154 respectivement. Dans le mode de réalisation de la figure 6, ces encoche 191 à 194 présentent une forme sensiblement demi-cylindrique.

Les crochets 151 à 154 sont agencés dans les supports associés 1510, 1520, 1530 et 1540, formés de manière que ces derniers définissent, en combinaison avec leur crochet respectif, une zone d'enserrement délimitée de façon suffisante pour maintenir efficacement la nacelle.

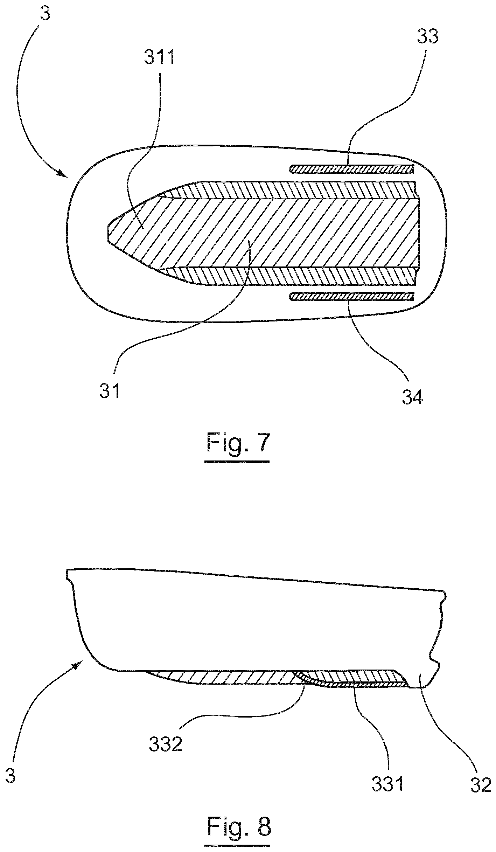

Une nacelle 3, spécialement adaptée pour être portée par l'embase 1, est représentée sur les figures 7 et 8. Cette nacelle 3 se distingue notamment de la nacelle 2 du premier mode de réalisation de l'invention, par la conformation de sa face inférieure, visible sur les figures 7 et 8.

Cette nacelle 3 comprend ainsi, sur sa face inférieure, un bossage formant coulisseau 31, qui s'étend selon une direction longitudinale. Ce coulisseau 31 présente une forme complémentaire de la forme de rainure incurvée des découpes 181 et 182. Il permet ainsi le guidage en translation selon un axe horizontal (F1), perpendiculaire à la direction d'avancement du véhicule lorsque l'embase est installé dans le véhicule, de la nacelle 3 dans les découpes complémentaires 181 et 182 de la bordure périphérique 14, ces découpes 181 et 182 formant coulisseau.

La nacelle 3 présente également une butée 32, formée à l'arrière. La mise en contact selon une liaison de type appui plan de la butée 32 avec une zone d'arrêt correspondante de l'embase 1, ménagée sur l'une des faces extérieures 141 de la bordure périphérique 14, permet notamment d'interrompre le mouvement de translation de la nacelle 3 lorsque celle-ci est dans une position d'installation. Cette interruption peut également être assurée au niveau des crochets et/ou des supports de crochet.

La nacelle 3 comprend de plus deux tiges cylindriques métalliques 33, 34 disposées de part et d'autre du coulisseau 31, chacune de ces tiges étant constituée d'une portion rectiligne 331, et d'au moins une portion incurvée 332, à l'extrémité de la tige orientée vers l'avant de la nacelle.

Plus précisément, la portion rectiligne 331 de la tige 33 s'étend selon une direction sensiblement parallèle à la direction longitudinale de la nacelle 3 à partir de la butée 32 et est agencée de manière à pouvoir, lorsque le bossage 31 coulisse dans les découpes 181 et 182, venir s'engager dans une des encoches 194 de la bordure périphérique 14. A cet effet, la portion rectiligne 331 de la tige 33 est dimensionnée de manière à présenter une forme sensiblement complémentaire à la forme incurvée du renfoncement.

La portion d'extrémité 332 est incurvée vers le haut et s'étend dans le prolongement de la portion rectiligne 331, en formant ici un angle obtus avec cette dernière. Cette portion incurvée 332 est solidarisé avec la face inférieure de la nacelle 3. La formation entre la portion rectiligne 331 et la portion incurvée 332 d'un angle obtus a pour avantage de permettre, lors du coulissement de la nacelle, le verrouillage des crochets 151 à 154 autour des barres et, notamment, des portions 331.

Il est cependant à noter que la formation par la portion incurvée 332 d'un angle obtus avec la portion rectiligne 331 ne constitue qu'un exemple de mode de réalisation possible de l'invention. Selon un autre mode de réalisation présentant une configuration autre des crochets, l'homme du métier aurait ainsi pu opter pour un agencement de la portion incurvée 332 tel que cette dernière forme avec la partie rectiligne 331 un angle droit ou aigu.

La portion incurvée 332 telle que représentée sur les figures 7 et 8 présente un faible rayon de courbure à son extrémité proximale de la portion rectiligne 331 et un rayon de courbure plus élevé sur la partie subséquente de sa longueur, conférant ainsi à cette dernière partie une forme sensiblement rectiligne.

Il est cependant à noter que la mise en œuvre de ces différents rayon de courbure sur la portion incurvée 332 n'est donnée qu'à titre d'exemple non limitatif, l'homme du métier ayant pu selon un autre mode de réalisation opter pour la mise en œuvre de rayons de courbure appartenant à des gammes de valeurs différentes.

Les caractéristiques propres à la tige 33 et à ses constituants s'appliquent *mutatis mutandis* à la tige 34.

De manière préférentielle, le bossage 31 présente une portion d'extrémité 311 de largeur réduite. Cette portion de largeur réduite est ménagée à proximité de la portion avant de la nacelle 3. Le bossage 31 présente une forme, par exemple en pointe ou en triangle tronqué, se développant progressivement de l'avant vers l'arrière de la nacelle, jusqu'à une portion de forme complémentaire des découpes 181 et 182 formant coulisse.

Cette portion de largeur réduite permet de faciliter l'introduction de la nacelle dans l'embase, en ajustant progressivement la position de la nacelle 3 lorsque cette dernière est introduite dans l'embase 1 selon une direction légèrement désaxée par rapport à l'axe défini par les découpes 181 et 182 de l'embase 1.

De manière analogue au premier mode de réalisation de l'invention et tel que représenté partiellement à la figure 6, il est ainsi possible de placer la nacelle 3 sur l'embase 1 par un mouvement de translation dans la direction horizontale perpendiculaire à la direction d'avancement du véhicule, le bossage 31 et les tiges 33 et 34 s'engageant respectivement par coulissement dans la découpe centrale 182 et les renforcements 194 et 192.

Selon ce mode de réalisation, il est également possible de placer la nacelle 3 en la posant directement sur l'embase 1, selon un mouvement sensiblement vertical, de telle sorte que le bossage 31 et les tiges 33 et 34 viennent respectivement s'engager dans les échancrures centrales 181, 182 et les encoches 191 à 194, pendant que les crochets 151 à 154 viennent en prise avec les tiges 33 et 34. Les formes évasées des échancrures 181, 182 et des encoches 191 à 194 permettent cette introduction par le dessus (contrairement à une forme en queue d'aronde ou similaire).

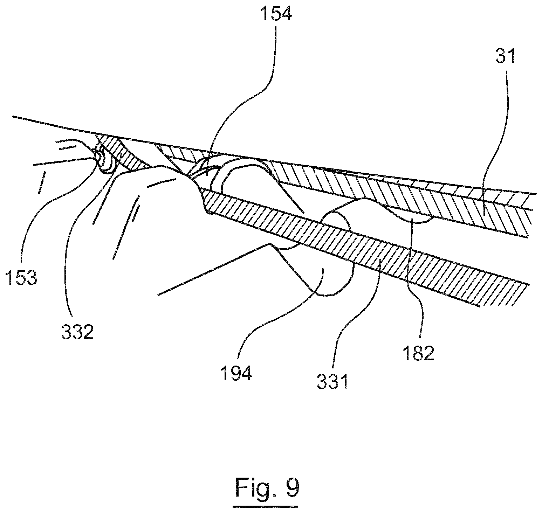

Lors d'un déplacement en translation de la nacelle 3 selon sa direction longitudinale et tel que représenté par la figure 9, la portion incurvée 332 de la tige coulisse le long de l'encoche 194, puis atteint le support de crochet 1540, et vient ensuite en contact avec le crochet 154. Le déplacement en translation de la nacelle 3 force le crochet 154 à passer de sa position de déverrouillage à sa position de verrouillage, lors du passage de la portion incurvée 332 à travers la zone d'enserrement du crochet 154. Le crochet 154 enserre alors, en combinaison avec le renforcement 1540 associé, la portion rectiligne 331 de la tige 33. De manière préférentielle, le dimensionnement du crochet 154 et du renforcement 1540 associé est réalisé de manière à ce que le diamètre de la zone d'enserrement soit sensiblement supérieur à celui de la section transversale de la portion rectiligne 331. Le passage du crochet 154 en position de verrouillage permet ainsi de limiter les déplacements latéraux de la portion rectiligne 331 tout en permettant ses déplacements longitudinaux.

La poursuite du coulissement de la nacelle par rapport à l'embase permet d'atteindre le second crochet 153, qui se verrouille de la même façon sur la tige.

En raison de la conformation du crochet 154 par rapport à celle de la tige 33, le passage du crochet 154 vers sa position verrouillée autour de la portion rectiligne 331 de la tige empêche tout passage ultérieur de la portion incurvée 332 de la tige au travers de la zone d'enserrement, de par le seul déplacement en translation de la nacelle 3 selon une direction opposée.

Le comportement du crochet 154 lors sa mise en contact avec l'extrémité incurvée 332 de la tige 33 et notamment son verrouillage subséquent sur cette tige s'applique donc *mutatis mutandis* au passage des tiges 33 ou 34 dans les zones d'enserrement des crochets 153, 152 et 151.

La longueur de la portion rectiligne 331 est sensiblement égale à la distance séparant, selon un axe horizontal transversal de l'embase 1, l'encoche 194, de la bordure périphérique 14, du crochet 153 qui en est le plus éloigné. Ainsi, lorsque les crochets 154 et 153 sont verrouillés autour de la barre métallique 33, l'action combinée du crochet 153, sur la portion incurvée 332 de la tige, et de la butée 32, sur la zone d'arrêt correspondante de la bordure périphérique 14, permet de supprimer le seul degré de liberté de la nacelle 3 montée coulissante par rapport à l'embase 1. La nacelle 3 est alors en position d'installation et est parfaitement assemblée à l'embase 1.

Une action sur des moyens de commande 16 de l'embase 1 permettant de faire passer les crochets 151 à 154 de leur position de verrouillage à leur position de déverrouillage est alors nécessaire pour permettre de nouveau le guidage en translation de la nacelle 3 dans l'embase 1.

### 6.6 Modes d'utilisation de l'embase et de la nacelle

Les conformations respectives de l'embase et de la nacelle permettent ainsi un assemblage particulièrement facile de la nacelle sur l'embase. La nacelle peut ainsi être montée dans un véhicule quand l'embase 1 est installée sur une place latérale du véhicule, proche d'une portière. L'adulte portant la nacelle peut facilement poser sur l'embase la portion avant de la nacelle, puis pousser la nacelle pour provoquer le coulissement et le verrouillage de la nacelle par rapport à l'embase, en position d'installation.

Dans les modes de réalisation illustrés, lorsque la nacelle est en position d'installation, la portion arrière de la nacelle, correspondant à la zone recevant les pieds de l'enfant, ne dépasse pas significativement du bord latéral de l'embase et n'empêche donc pas la fermeture de la portière du véhicule, tandis que la portion avant de la nacelle, correspondant à la zone recevant la tête de l'enfant, n'est plus au dessus de l'embase et est en porte-à-faux, par exemple au dessus d'une place centrale du véhicule.

Il est à noter également que les formes respectives de l'embase 1 et de la nacelle 2 ou 3 permettent le montage de la nacelle sur l'embase dans deux positions, les pieds de l'enfant pouvant être situés à droite ou à gauche par rapport à la direction de l'avancement du véhicule. La nacelle peut ainsi être montée très facilement sur l'embase 1, que cette embase soit placée sur un siège jouxtant une portière droite ou une portière gauche du véhicule.

Une embase selon l'invention permet ainsi de supporter, au choix de l'utilisateur, soit une coque 5, comme le représente la figure 5, soit une nacelle 2 ou 3, comme le représente la figure 4, sans que la position de l'embase doive être changée. Par ailleurs, la même commande de verrouillage et de déverrouillage peut être utilisée pour verrouiller et déverrouiller une nacelle et une coque, voire les mêmes crochets. Une telle embase permet ainsi de simplifier sensiblement l'installation d'un enfant en bas âge dans un véhicule, notamment quand il est transporté dans une nacelle.

La nacelle peut comprendre au moins une poignée centrale permettant son transport. De manière additionnelle, la nacelle peut comprendre également une poignée d'extrémité, formée à l'arrière de la nacelle, permettant de contrôler le guidage en translation de la nacelle dans l'embase. Ces poignées permettent ainsi une manipulation aisée de la nacelle dans l'espace restreint offert par l'habitacle du véhicule, en particulier lors des étapes de solidarisation et de désolidarisation de la nacelle par rapport à l'embase, une main supportant l'essentiel du poids à l'aide des poignées centrales, et l'autre main équilibrant et guidant la nacelle pour l'assemblage avec l'embase.

## Revendications

1. Equipement de transport d'un enfant en bas âge dans un véhicule, comprenant une embase (1) destinée à être solidarisée à un siège dudit véhicule et une nacelle (2, 3) permettant d'accueillir ledit enfant en position allongée dans la direction longitudinale de la nacelle (2, 3), et pouvant être solidarisée à ladite embase (1),
ladite nacelle (2, 3) et ladite embase (1) comprenant des éléments de guidage de formes complémentaires permettant de réaliser un guidage en translation entre ladite nacelle (2, 3) et ladite embase (1), selon une direction sensiblement parallèle à la direction longitudinale de la nacelle (2, 3),
ledit équipement comprenant des moyens de verrouillage et de déverrouillage de ladite nacelle (2, 3) par rapport à ladite embase (1), dans au moins une position d'utilisation, **caractérisé en ce que** lesdits moyens de verrouillage et de déverrouillage comprennent au moins un crochet (151, 152, 153, 154) mobile entre une position déverrouillée et une position verrouillée, monté sur ladite embase (1), et au moins une tige (33, 34) montée sur ladite nacelle (2, 3) parallèlement à la direction longitudinale de ladite nacelle, coopérant avec le ou lesdits crochets (151, 152, 153, 154).

2. Equipement selon la revendication 1, **caractérisé en ce que** ladite embase (1) comprend quatre crochets (151, 152, 153, 154), coopérant avec deux tiges (33, 34) de ladite nacelle (2, 3).

3. Equipement selon l'une quelconque des revendications 1 ou 2, **caractérisé en ce que** lesdits crochets (151, 152, 153, 154) sont montés de façon à pouvoir également coopérer avec une coque (5) ou un siège auto.

4. Equipement selon la revendication 1, **caractérisé en ce qu'**une des extrémités (332) de la ou desdites tiges (33, 34) est incurvée vers le haut, de façon à entraîner le verrouillage d'un crochet (151, 152, 153, 154) sur la tige (33, 34), lorsque ladite extrémité (332) entre en contact avec ledit crochet.

5. Equipement selon l'une quelconque des revendications 1 à 4, **caractérisé en ce que** ladite embase (1) comprend au moins une portion formant coulisse (171, 172, 181, 182, 191, 192, 193, 194), apte à guider en translation au moins un coulisseau (31) complémentaire lié à une nacelle (2, 3).

6. Equipement selon la revendication 5, **caractérisé en ce que** ledit coulisseau (31) et ladite coulisse (171, 172) forment un assemblage de type queue d'aronde.

7. Equipement selon la revendication 5, **caractérisé en ce que** ladite coulisse (181, 182, 191, 192, 193, 194) est évasée, de façon à permettre également un assemblage de ladite nacelle (2, 3) et de ladite embase (1) en déplaçant ladite nacelle (2, 3) sensiblement verticalement.

8. Equipement selon les revendications 2 et 5, **caractérisé en ce que** ledit coulisseau (31) s'étend entre les deux tiges (33, 34).

9. Equipement selon l'une quelconque des revendications 5 à 8, **caractérisé en ce que** ledit coulisseau (31) présente une portion d'extrémité (311) de largeur réduite.

10. Equipement selon la revendication 9, **caractérisé en ce que** ladite portion d'extrémité (311) présente une forme se développant progressivement jusqu'à une forme complémentaire de ladite coulisse (171, 172, 181, 182).

11. Equipement selon l'une quelconque des revendications 1 à 10, **caractérisé en ce qu'**il comprend des moyens de butée, interrompant la translation de ladite nacelle (2, 3) lorsque celle-ci est dans une position d'installation.

12. Equipement selon la revendication 11, **caractérisé en ce que** lesdits moyens de butée sont formés par une seconde portion incurvée d'au moins une desdites tiges (33, 34) et/ou par une butée (32) formée sur la nacelle (2, 3) et coopérant avec une zone d'arrêt (141) correspondante de ladite embase (1).

13. Equipement selon l'une quelconque des revendications 1 à 12, **caractérisé en ce que** ladite nacelle (2, 3) comprend des poignées centrales, permettant son transport, et une poignée d'extrémité, permettant de contrôler le guidage en translation.

14. Equipement selon l'une quelconque des revendications 1 à 12, **caractérisé en ce que**, lorsque ladite nacelle (2, 3) est assemblée à ladite embase (1), la portion arrière de ladite nacelle (2, 3), correspondant à la zone recevant les pieds de l'enfant, est placée sensiblement au-dessus de ladite embase (1), et la portion avant de ladite nacelle (2, 3), correspondant à la zone recevant la tête de l'enfant, est placée en porte-à-faux par rapport à ladite embase (1).

15. Nacelle (2, 3) pour un équipement selon l'une quelconque des revendications 1 à 14, comprenant au moins une tige (33, 34) montée sur ladite nacelle (2, 3) parallèlement à la direction longitudinale de ladite nacelle (2, 3), la ou lesdites tiges (33, 34) étant adaptées pour coopérer avec au moins un crochet (151, 152, 153, 154) mobile entre une position déverrouillée et une position verrouillée, monté sur une embase (1).

16. Embase (1) pour un équipement selon l'une quelconque des revendications 1 à 14, comprenant au moins un crochet (151, 152, 153, 154) mobile entre une position déverrouillée et une position verrouillée, monté sur ladite embase (1), le ou lesdits crochets (151, 152, 153, 154) étant adaptés pour coopérer avec au moins une tige (33, 34) montée sur une nacelle (2, 3) parallèlement à la direction longitudinale de ladite nacelle (2, 3).

## Patentansprüche

1. Vorrichtung zum Transport eines Kleinkindes in einem Fahrzeug, umfassend eine Basis (1), die dazu bestimmt ist, an einem Sitz des Fahrzeuges befestigt zu werden, und eine Kinderliege (2, 3), die die Aufnahme des Kindes in liegender Position in Längsrichtung der Kinderliege (2, 3) ermöglicht, und die mit der Basis (1) fest verbunden werden kann,
wobei die Kinderliege (2, 3) und die Basis (1) komplementär geformte Führungselemente umfassen, die es ermöglichen, eine translatorische Führung zwischen der Kinderliege (2, 3) und der Basis (1) entlang einer Richtung, die im Wesentlichen parallel zur Längsrichtung der Kinderliege (2, 3) ist, auszuführen, wobei die Vorrichtung in Bezug auf die Basis (1) Mittel zum Verriegeln und Entriegeln der Kinderliege (2, 3) in mindestens einer Nutzungsposition aufweist, **dadurch gekennzeichnet, dass** die Mittel zum Verriegeln und Entriegeln mindestens einen Haken (151, 152, 153, 154), der zwischen einer entriegelten Position und einer verriegelten Position beweglich ist und der auf der Basis (1) angebracht ist, und mindestens einen Stift (33, 34), der auf der Kinderliege (2, 3) parallel zu der Längsrichtung der Kinderliege angebracht ist und mit dem oder den Haken (151, 152, 153, 154) zusammenwirkt, aufweist.

2. Vorrichtung nach Anspruch 1, **dadurch gekennzeichnet, dass** die Basis (1) vier Haken (151, 152, 153, 154) aufweist, die mit zwei Stiften (33, 34) der Kinderliege (2, 3) zusammenwirken.

3. Vorrichtung nach einem der Ansprüche 1 oder 2, **dadurch gekennzeichnet, dass** die Haken (151, 152, 153, 154) derart angebracht sind, dass sie ebenfalls mit einer Schale (5) oder einem Kindersicherheitssitz zusammenwirken können.

4. Vorrichtung nach Anspruch 1, **dadurch gekennzeichnet, dass** eines der Enden (332) des Stifts oder der Stifte (33, 34) nach oben gekrümmt ist, so dass die Verriegelung eines Hakens (151, 152, 153, 154) auf dem Stift (33, 34) herbeigeführt wird, wenn das Ende (332) mit dem Haken in Berührung kommt.

5. Vorrichtung nach einem der Ansprüche 1 bis 4, **dadurch gekennzeichnet, dass** die Basis (1) mindestens ein Teilstück umfasst, das eine Führungsbahn (171, 172, 181, 182, 191, 192, 193, 194) bildet, die geeignet ist, mindestens ein mit einer Kinderliege (2, 3) verbundenes komplementäres Gleitstück (31) translatorisch zu führen.

6. Vorrichtung nach Anspruch 5, **dadurch gekennzeichnet, dass** das Gleitstück (31) und die Führungsbahn (171, 172) eine Verbindung vom Typ Schwalbenschwanz bilden.

7. Vorrichtung nach Anspruch 5, **dadurch gekennzeichnet, dass** die Führungsbahn (181, 182, 191, 192, 193, 194) so erweitert ist, dass ebenfalls eine Verbindung der Kinderliege (2, 3) und der Basis (1) möglich ist, indem die Kinderliege (2, 3) im Wesentlichen vertikal verschoben wird.

8. Vorrichtung nach Ansprüchen 2 und 5, **dadurch gekennzeichnet, dass** das Gleitstück (31) sich zwischen den zwei Stiften (33, 34) erstreckt.

9. Vorrichtung nach einem der Ansprüche 5 bis 8, **dadurch gekennzeichnet, dass** das Gleitstück (31) einen Endabschnitt (311) von verringerter Breite aufweist.

10. Vorrichtung nach Anspruch 9, **dadurch gekennzeichnet, dass** der Endabschnitt (311) eine Form aufweist, die sich zunehmend bis zu einer die Führungsbahn (171, 172, 181, 182) komplementären Form entwickelt.

11. Vorrichtung nach einem der Ansprüche 1 bis 10, **dadurch gekennzeichnet, dass** sie Anschlagmittel umfasst, die die Translation der Kinderliege (2, 3) unterbrechen, wenn sich diese in einer Installationsposition befindet.

12. Vorrichtung nach Anspruch 11, **dadurch gekennzeichnet, dass** die Anschlagmittel durch ein zweites gekrümmtes Teilstück mindestens eines der Stifte (33, 34) und/oder durch einen auf der Kinderliege (2, 3) ausgebildeten Anschlag (32) gebildet werden und mit einem entsprechenden Anschlagbereich (141) der Basis (1) zusammenwirken.

13. Vorrichtung nach einem der Ansprüche 1 bis 12, **dadurch gekennzeichnet, dass** die Kinderliege (2, 3) zentrale Griffe umfasst, die ihren Transport ermöglichen, und einen Griff am Ende, um die translatorische Führung zu steuern.

14. Vorrichtung nach einem der Ansprüche 1 bis 12, **dadurch gekennzeichnet, dass**, wenn die Kinderliege (2, 3) auf der Basis (1) angebracht wird, das hintere Teilstück der Kinderliege (2, 3), das dem Bereich zur Aufnahme der Füße des Kindes entspricht, im Wesentlichen über der Basis (1) platziert ist, und das vordere Teilstück der Kinderliege (2, 3), das dem Bereich zur Aufnahme des Kopfes des Kindes entspricht, in Bezug auf die Basis (1) überhängend platziert ist.

15. Kinderliege (2, 3) für eine Vorrichtung nach einem der Ansprüche 1 bis 14, die mindestens einen Stift (33, 34) umfasst, der auf der Kinderliege (2, 3) parallel zur Längsrichtung der Kinderliege (2, 3) angebracht ist, wobei der Stift oder die Stifte (33, 34) so beschaffen sind, um mit mindestens einem auf einer Basis (1) angebrachten beweglichen Haken (151, 152, 153, 154) zwischen einer entriegelten und einer verriegelten Position zusammenzuwirken.

16. Basis (1) für eine Vorrichtung nach einem der Ansprüche 1 bis 14, die mindestens einen beweglichen Haken (151, 152, 153, 154) zwischen einer entriegelten und einer verriegelten Position umfasst, der auf der Basis (1) angebracht ist, wobei der oder die Haken (151, 152, 153, 154) so beschaffen sind, um mit mindestens einem Stift (33, 34) zusammenzuwirken, der auf einer Kinderliege (2, 3) parallel zur Längsrichtung der Kinderliege (2, 3) angebracht ist.

## Claims

1. Equipment for carrying a very young child in a vehicle, comprising a base (1) intended to be secured to a seat of said vehicle and a bassinet (2, 3) for accommodating said child in a lying-down position in the longitudinal direction of the bassinet (2, 3), and able to be secured to said base (1),
said bassinet (2, 3) and said base (1) comprising guidance elements of complementary shapes for achieving translational guidance between said bassinet (2, 3) and said base (1), in a direction substantially parallel to the longitudinal direction of the bassinet (2, 3),
said equipment comprising means for locking and unlocking said bassinet (2, 3) with respect to said base (1), in at least one position of use,
**characterised in that** said locking and unlocking means comprise at least one hook (151, 152, 153, 154) able to move between an unlocked position and a locked position, mounted on said base (1), and at least one rod (33, 34) mounted on said bassinet (2, 3) parallel to the longitudinal direction of said bassinet (2, 3), cooperating with said hook or hooks (151, 152, 153, 154).

2. Equipment according to claim 1, **characterised in that** said base (1) comprises four hooks (151, 152, 153, 154) cooperating with two rods (33, 34) of said bassinet (2, 3).

3. Equipment according to anyone of claims 1 or 2, **characterised in that** said hooks (151, 152, 153, 154) are mounted so as to be able also to cooperate with a shell (5) or a car seat.

4. Equipment according to claim 1, **characterised in that** one of the ends (332) of said rod or rods (33, 34) is curved upwards, so as to cause the locking of a hook (151, 152, 153, 154) on the rod (33, 34) when said end (332) comes into contact with said hook.

5. Equipment according to anyone of claims 1 to 4, **characterised in that** said base (1) comprises at least one portion forming a slide (171, 172, 181, 182, 191, 192, 193, 194) able to guide in translation at least one complementary runner (31) connected to a bassinet (2, 3) .

6. Equipment according to claim 5, **characterised in that** said runner (31) and said slide (171, 172) form an assembly of the dovetail type.

7. Equipment according to claim 5, **characterised in that** said slide (181, 182, 191, 192, 193, 194) is splayed so as also to allow assembly of said bassinet (2, 3) and said base (1) by moving said bassinet (2, 3) substantially vertically.

8. Equipment according to claims 2 and 5, **characterised in that** said runner (31) extends between the two rods (33, 34).

9. Equipment according to anyone of claims 5 to 8, **characterised in that** said runner (31) has an end portion (311) of reduced width.

10. Equipment according to claim 9, **characterised in that** said end portion (311) has a form developing gradually to a complementary form of said slide (171, 172, 181, 182).

11. Equipment according to anyone of claims 1 to 10, **characterised in that** it comprises stop means, interrupting the translation of said bassinet (2, 3) when the latter is in an installation position.

12. Equipment according to claim 11, **characterised in that** said stop means are formed by a second curved portion of at least one of said rods (33, 34) and/or by a stop (32) formed on the bassinet (2, 3) and cooperating with a corresponding stop zone (141) of said base (1).

13. Equipment according to anyone of claims 1 to 12, **characterised in that** said bassinet (2, 3) comprises central handles enabling it to be carried and an end handle for controlling the translational guidance.

14. Equipment according to anyone of claims 1 to 12, **characterised in that**, when said bassinet (2, 3) is assembled on said base (1), the rear portion of said bassinet (2, 3), corresponding to the zone receiving the feet of the child, is placed substantially above said base (1), and the front portion of said bassinet (2, 3), corresponding to the zone receiving the head of the child, is placed so as to project with respect to said base (1).

15. Bassinet (2, 3) for an equipment according to anyone of claims 1 to 14 comprising at least one rod (33, 34) mounted on said bassinet (2, 3) parallel to the longitudinal direction of said bassinet (2, 3), said rod or rods (33, 34) being adapted for cooperating with at least one hook (151, 152, 153, 154) moveable between an unlocked position and a locked position, mounted on a base (1).

16. Base (1) for an equipment according to anyone of claims 1 to 14, comprising at least one hook (151, 152, 153, 154) moveable between an unlocked position and a locked position, mounted on a base (1), said hook or hooks (151, 152, 153, 154) being adapted for cooperating with at least one rod (33, 34) mounted on said bassinet (2, 3) parallel to the longitudinal direction of said bassinet (2, 3).
